# EUROPEAN PATENT SPECIFICATION

(11) **EP 2 607 694 B1**
(45) Date of publication and mention of the grant of the patent: **12.08.2015**
(21) Application number: 11195347.7
(22) Date of filing: 22.12.2011
(51) Int. Cl.: F03D 11/00, F03D 7/02

(54) **Method for operating a wind turbine**
Verfahren zum Betreiben einer Windturbine
Procédé de fonctionnement d'une éolienne

(43) Date of publication of application: 26.06.2013
(73) Proprietor: Siemens Aktiengesellschaft, 80333 München (DE)
(72) Inventor: Pedersen, Bo, 7620 Lemvig (DK); Thomsen, Kim, 7430 Ikast (DK)

(56) References cited:
- WO-A1-2010/098815
- AT-A1- 509 625
- US-A1- 2006 249 957
- US-A1- 2009 206 607

## Description

The invention relates to a method for operating a wind turbine, comprising at least one generator and at least two components being rotatably supported relative to each other by means of at least one sliding bearing, whereby at least one operational state information of the wind turbine indicating the operational state of the wind turbine is determined.

It is known to provide components of the wind turbine being rotatably supported relative to each other with sliding or plain bearings instead of conventional rolling bearings. Sliding bearings show advantages in comparison to rolling bearings particularly regarding mechanical behaviour and life time.

However, respective sliding bearings show comparatively high static friction or so called stiction, i.e. the required force to initiate motion in a respective sliding bearing standing still is comparatively high. Particularly, when using respective sliding bearings as main bearings in a wind turbine, high forces or high torque has to be applied in order to start-up the operation of the wind turbine, i.e. particularly start the rotation of the drive train so as to force the respective sliding bearings in a desired state of hydrodynamic lubrication.

Traditionally, wind energy is exploited to overcome the high static friction during start-up of the wind turbine. Yet, problems may arise in situations when wind energy is not enough and/or not even enough to force the rotor blades of a wind turbine to rotate, i.e. to force the respective sliding bearings in the desired state of hydrodynamic lubrication. Even with supporting control of the blade pitch angles of the rotor blades, start-up of the wind turbine may be difficult in wind calm or uneven, gusty wind situations.

AT 509 625 A1 discloses a bearing element for supporting the rotor hub of a wind turbine with an inner ring element and an outer ring element, and with a plain bearing being formed between the inner ring element and the outer ring element.

It is the object of the invention to provide an improved method for operating a wind turbine considering the high static friction of sliding bearings.

This object is inventively achieved by a method according to claim 1.

The inventive principle proposes using the generator as an electric motor during start-up and shut-down of the wind turbine. Start-up and shut-down of the wind turbine is determined by respective operational state information concerning the (current or prospective) operational state of the wind turbine.

The operational state information essentially represents all kinds of possible operational states of a wind turbine which may be basically grouped in start-up state, operational state, and shut-down state. Thereby, the start-up state usually relates to a state in which the motion of the rotor hub of the wind turbine begins from standstill, i.e. 0 rpm (rounds per minute), or only a few rpm to a threshold rpm. The operational state of the wind turbine usually covers large ranges of rpm above the aforementioned threshold rpm. The shut-down state of the wind turbine usually begins opposite to the start-up state from a threshold rpm to only a few rpm or standstill of the wind turbine, i.e. 0 rpm.

Hence, a certain amount of power is required for using the generator as an electric motor during start-up and shut-down of the wind turbine. The generator is an electric machine which can be used to generate electric power by applying a certain motion or generate a certain motion by applying electric power. The generator is used as a conventional generator for producing electric power during all other operational states of the wind turbine unless start-up or shut-down of the wind turbine.

By concertedly using the generator as an electric motor, a soft, smooth start-up and shut-down of the wind turbine is feasible. Appropriate control of the reversely operated generator, i.e. the electric motor overcomes stiction effects of the sliding bearings further avoiding the generation and propagation of vibrations and/or oscillations within the structure of the wind turbine usually occurring during start-up or shut-down of the wind turbine.

The operational state information is usually determined by a control unit in terms of a central wind turbine controller or the like. Thereby, respective start signals or stop signals may be input to the control unit in order to initiate or perform start-up or shut-down of the wind turbine.

Possible components being rotatably supported relative to each other by means of respective sliding bearings may be the rotatable shafts, particularly the main shaft, the rotor support of the rotor of the generator, components of the rotor hub, etc.

It is preferred that the operational state information is determined by considering at least one operational parameter of the wind turbine. Thereby, the used operational parameter of the wind turbine may be or may indicate the torque on the or further rotatable components of the wind turbine and/or the rotational speed of the or further rotatable components of the wind turbine and/or the state of lubrication of the at least one sliding bearing, particularly the film thickness of the lubricant, and/or wind speed. Hence, the mentioned parameters allow an extensive and exact determination of the operational state information which is the basis for controlling and/or monitoring start-up and shut-down of the wind turbine.

Thereby, torque, rotational speed or any other parameters related to motions of respective components of the wind turbine such as shafts for instance are deemed as indicators for respective operational states of the wind turbine. In this context, no or little torque or rotational speed compared to respective reference values may indicate standstill or no proper operation of the wind turbine, i.e. the wind turbine is generally ready for start-up. Hence, respective little torque or rotational speeds may be used as an initial signal for performing start-up of the wind turbine.

Aside, rotational speed of respective rotatable components is or may be correlated with the state of lubrication of the respective sliding bearing supporting the respective components in terms of an indicator for film thickness of the lubricant such as oil, grease, or the like. Basically high rotational speeds indicate good hydrodynamic lubrication with a high lubricant film thickness fully separating the respective surfaces of the rotatable components being moved relative to each other such as particularly respective (sliding) bearing surfaces, whereas comparatively low rotational speeds indicate comparatively low lubrication film thickness and possible contact between the respective surfaces of the rotatable components being moved relative to each other such as particularly respective (sliding) bearing surfaces.

Furthermore, knowledge of wind speed and/or wind direction is a proper means for indicating the operational state of the wind turbine, whereby respective high, particularly even, wind speeds may indicate a good situation for start-up of the wind turbine, whereas low wind speeds may indicate a good situation for shut-down of the wind turbine.

All named parameters may be determined by appropriate sensor means distributed around the wind turbine, which sensor means preferably communicate with a central control unit of the wind turbine.

It is possible that the operational state information indicates start-up of the wind turbine by considering the rotational speed of at least one rotatable component of the wind turbine, particularly the central shaft of the wind turbine, i.e. usually the shaft directly connecting the rotor hub having respective rotor blades attached thereto with the rotor of the generator, whereby start-up is indicated when the rotational speed of the component lies in a given interval ranging from 0 rpm to a given threshold rpm. Hence, start-up of the wind turbine refers to a certain interval of rotational speed with the interval embracing 0 rpm to the respective given threshold rpm, which has to be individually defined for each type of wind turbine.

Thereby, it is of advantage when a rotor blade pitch angle control means adjusts a pitch angle of respective rotor blades of the wind turbine during start-up of the wind turbine when the rotational speed of the rotatable component is above the given threshold rpm so as to increase the angle of attack of wind on the rotor blades. In such a manner, wind energy may be exploited during or right after start-up of the wind turbine so as to support rotation of the rotor blades of the wind turbine whose pitch angle is dynamically adjusted to maximise the torque from the wind by means of the rotor blade pitch angle control means. Hence, the wind energy supports the drive of the wind turbine in this case. By concertedly increasing the angle of attack of wind on the rotor blades, the influence of wind energy on the rotational speed of the rotor hub is increased allowing a smooth transition from standstill of the wind turbine to operation of the wind turbine, i.e. to a smooth start-up of the wind turbine.

The pitch angle of a rotor blade is a means to indicate the angle of attack of the rotor blades of the wind turbine, i.e. mainly defines the size of the area of the rotor blade being directly exposed to wind.

Likewise, the operational state information may indicate shut-down of the wind turbine by considering the rotational speed of at least one rotatable component of the wind turbine, particularly the central shaft of the wind turbine, whereby shut-down is indicated when the rotational speed of the component lies in a given interval ranging from a given threshold rpm to 0 rpm. Hence, akin to start-up of the wind turbine, shut-down of the wind turbine also refers to a certain interval of rotational speed with the interval embracing a respective given threshold rpm, which has to be individually defined for each type of wind turbine, to 0 rpm.

In analogous manner to start-up of the wind turbine, it is possible that a rotor blade pitch angle control means adjusts a pitch angle of rotor blades of the wind turbine during shut-down of the wind turbine when the rotational speed of the rotatable component is below the given threshold rpm so as to decrease the angle of attack of wind of the rotor blades. By concertedly decreasing the angle of attack of wind on the rotor blades, the influence of wind energy on the rotational speed of the rotor hub is reduced allowing a smooth transition from operation of the wind turbine to shut-down of the wind turbine.

In either case, the rotor blade pitch angle control means and/or the central control unit of the wind turbine preferably communicates with respective wind sensors, indicating a number of wind parameters such as wind speed and/or wind direction for instance. The rotor blade pitch angle control means and/or the central control unit of the wind turbine may also communicate with devices supplying information concerning weather and/or wind forecast or weather and/or wind prognoses. The respective information may be transmitted to the generator of the wind turbine.

According to a further embodiment of the invention, wind speed is determined, whereby, when the wind turbine is intended to start its operation and wind speed is below a given wind speed threshold value, start-up of the wind turbine is delayed until wind speed is above the threshold wind speed value. Emanating from standstill of the wind turbine, the start-up of the wind turbine is set to a wind situation having appropriate wind speed conditions allowing the wind energy to support the drive of the wind turbine. In such a manner, start-up performance of the wind turbine may be improved particularly in regard of the overcoming of static friction of respective sliding bearings. Thereby, reduced tear and wear effects on the respective sliding bearings are a positive side effect.

Appropriate wind speed conditions may be stored in a storage medium and may be considered for prospective start-ups of the wind turbine. In such a manner, it may be assured that prospective start-ups of the wind turbine will be successfully performed.

Aside, the invention relates to a wind turbine, particularly a direct drive wind turbine, comprising at least one generator, at least two components being rotatably supported relative to each other by means of at least one sliding bearing, and a control unit adapted to execute the aforementioned method. All annotations concerning the inventive method also apply to the inventive wind turbine.

In the following, the invention is described in detail, whereby reference is made to the principle drawings. Thereby,
- fig. 1: shows a principle drawing of a wind turbine according to an exemplary embodiment of the invention;
- fig. 2: shows a scheme of the inventive method concerning start-up of a wind turbine according to an exemplary embodiment of the invention;
- fig. 3: shows a diagram showing rpm of the rotor hub vs. wind speed for start-up of a wind turbine according to an exemplary embodiment;
- fig. 4: shows a scheme of the inventive method concerning shut-down of a wind turbine according to an exemplary embodiment; and
- fig. 5: shows a diagram showing rpm of the rotor hub vs. wind speed for shut-down of a wind turbine according to an exemplary embodiment.

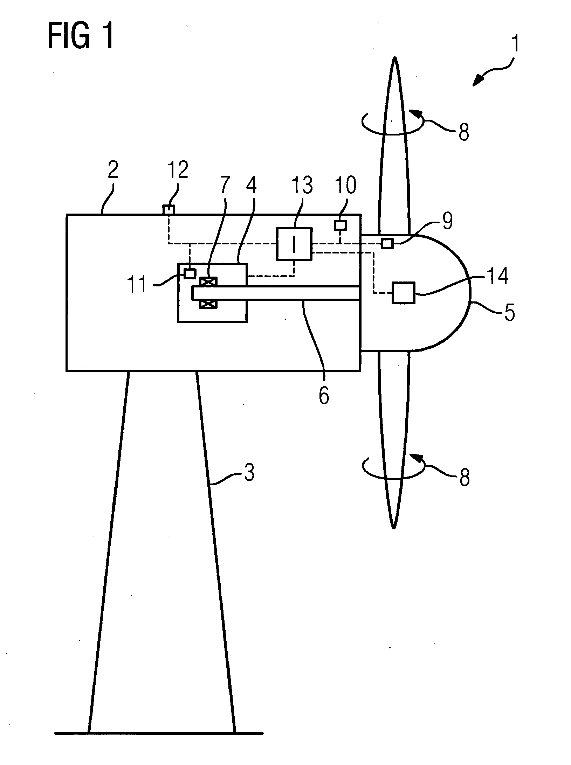

Fig. 1 shows a principle drawing of a wind turbine 1 according to an exemplary embodiment of the invention. The wind turbine 1 comprises a nacelle 2 disposed on a tower construction 3. The nacelle 2 houses a generator 4 which is directly connected to a rotor hub 5 by means of a central, direct or main shaft 6 which is rotatably supported relative to nonrotating components of the generator 4 such as the stator by means of a sliding bearing 7 (plain bearing). The rotor hub 5 comprises a number of rotor blades 6 attached thereto. As is indicated by arrows 8, the rotor blades 6 may be rotated around their longitudinal axis by means of a rotor blade pitch control means 14. The wind turbine 1 is disposed or anchored to ground or sea ground.

Several sensors 9 - 12 are provided with the wind turbine 1. Thereby, sensor 9 is capable of determining the rotational speed of the rotor hub 5, sensor 10 is capable of determining the torque on the shaft 6, sensor 11 is capable of determining the film thickness of the lubricant of the sliding bearing 7, i.e. the lubrication state of the sliding bearing 7, and sensor 12 is capable of determining wind speed and/or wind direction.

The sensors 9 - 12 as well as the generator 4 and the rotor blade pitch control means 14 communicate with a control unit 13 in terms of a central wind turbine controller. The control unit 13 is capable of determining operational state information I indicating the operational state of the wind turbine 1 on basis of the signals of the sensors 9 - 12.

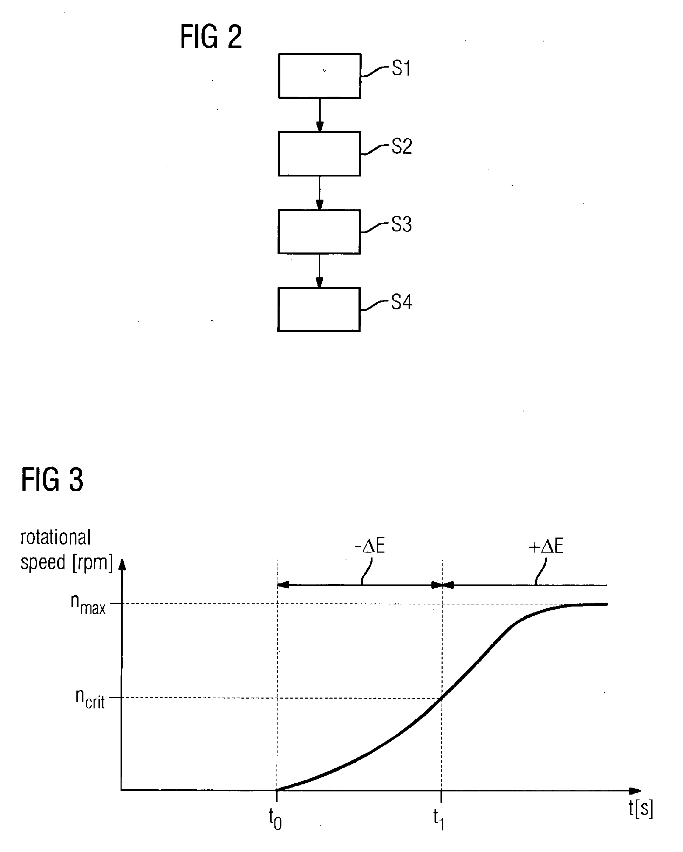

Fig. 2 shows a scheme concerning the inventive method during start-up of a wind turbine 1 according to an exemplary embodiment. In this case, the wind turbine 1 is firstly not operating, i.e. the rotor hub 5 does not rotate and consequently, the generator 4 does not produce electric power. An operational state information I indicating start-up of the wind turbine 1 is input to or generated in the control unit 13 in step S1. The operational state information I usually considers current operational parameters of the wind turbine 1 such as the rotational speed of the main shaft 6 and/or the rotor hub 5 for instance. Aside, the operational state information I may consider climatic conditions, i.e. appropriate wind speed for instance, being appropriate for start-up of the wind turbine 1.

As is discernible from fig. 3 depicting a diagram showing rotational speed in rpm of the rotor hub 5 (y-axis) vs. time (x-axis) for start-up of a wind turbine 1, the operational state information I may indicate start-up of the wind turbine 1 by considering the rotational speed in rpm of at least one rotatable component of the wind turbine 1, particularly the main shaft 6 of the wind turbine 1. Thereby, start-up of the wind turbine 1 is indicated when the rotational speed of the component, i.e. the main shaft 6 lies in a given interval ranging from 0 rpm to a given threshold rpm n_{crit}. The maximum allowable rotational speed of the main shaft 6 is denoted as nₘₐₓ. Both the given threshold rpm n_{crit} and the maximum allowable rotational speed of the main shaft 6, i.e. the maximum allowable rpm nₘₐₓ of the main shaft 6 are to be individually defined for individual types of wind turbines 1.

On basis of the operational state information I indicating start-up of the wind turbine 1, the control unit 13 controls the generator 4 so as to be operated as an electrical motor for driving the wind turbine 1, i.e. the main shaft 6 (cf. step S2). I.e., the generator 4 will not produce, but consume electric power to provide a concertedly, smooth start-up of the wind turbine 1 which is particularly of advantage in order to overcome high static friction (stiction) of the sliding bearings 7 in order to initiate rotational motion of the standing sliding bearing 7. Hence, respective stick-slip effects or other possible effects during the beginning of rotation of the sliding bearing 7 which may introduce vibrations and/or oscillations in the structure of the wind turbine 1 are avoided or at least reduced.

Referring to fig. 3, the power input by the electric generator 4 which is operated as an electric motor during start-up of the wind turbine 1 is denoted as a -ΔE. At t = to, the wind turbine 1 is driven by the reversely operated generator 4 until the threshold rpm n_{crit} is reached. At this point, i.e. when the rotational speed of the main shaft 6 is above the given threshold rpm n_{crit}, the control unit 13 actuates the rotor blade pitch control means 14 to adjust the pitch angle of the rotor blades so as to increase the angle of attack of wind on the rotor blades (cf. step S3). Hence, wind energy is exploited to further drive the wind turbine 1. If wind energy is sufficiently high to drive the wind turbine 1 above the given threshold rpm n_{crit}, i.e. wind speed is above a critical value v_{crit}, such as at t = t₁ the control unit actuates the generator 4 to produce electric power (denoted as +ΔE) since start-up of the wind turbine 1 is finished and proper operation of the wind turbine 1 is possible (cf. step S4).

Generally, it is possible that, when the wind turbine 1 is intended to start its operation and wind speed is below a given wind speed threshold value, start-up of the wind turbine 1 may be delayed until wind speed is above the wind speed threshold value. A respective threshold wind speed may be v_{crit} as mentioned before. In such a manner, it is assured that the wind conditions allow driving the wind turbine 1 above the threshold rpm n_{crit}, i.e. that the wind is strong enough to drive the wind turbine 1 above the threshold rpm n_{crit}.

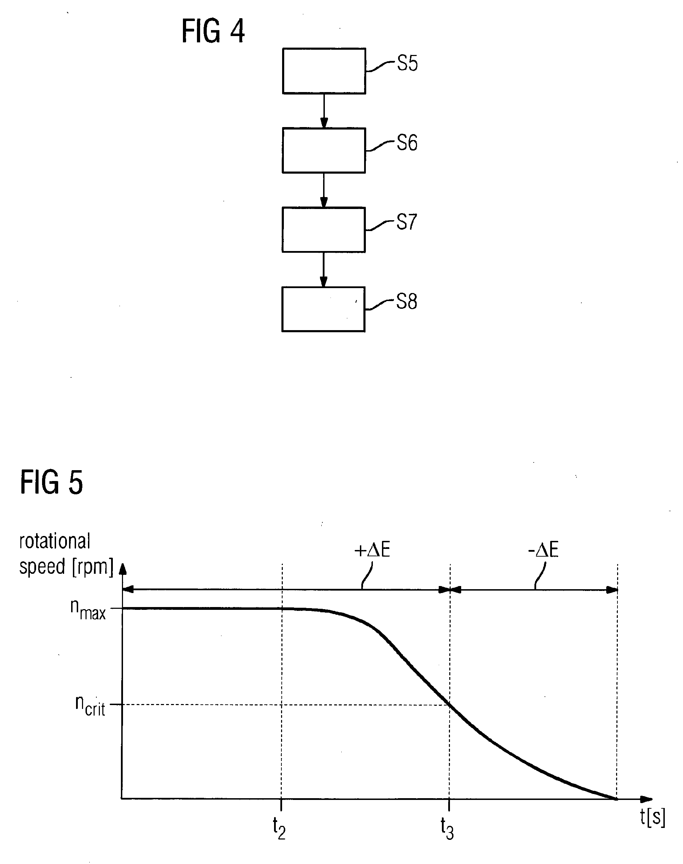

The reverse principle is applicable for shut-down of the wind turbine 1 (cf. fig. 4, 5). In step S5 an operational state information I is input to or generated in the control unit 13. The operational state information I may consider wind speed for instance so that shut-down of the wind turbine 1 may be intended for comparatively low wind speeds for instance. At first, the control unit 13 actuates the rotor blade pitch control means 14 so as to rotate the rotor blades in order to decrease the angle of attack of wind on the rotor blades which is a measure to reduce rotational speed of the rotor hub 5 (cf. step S6) while the generator 4 still generates electric power (+ΔE). This may happen at a time t = t₂.

With decreasing rpm of the main shaft 6 (cf. fig. 5) towards the threshold rpm n_{crit}, power output (+ΔE) of the generator 4 is also reduced. As soon as the rotational speed of the central shaft 6 is below the threshold rpm n_{crit}, i.e. at time t = t₃ in fig. 5, the control unit 13 stops the production of power by the generator 4 and actuates the generator 4 to be operated as an electric motor (cf. step S7). The electric motor further reduces the rotational speed of the main shaft 6 in concerted and smooth manner so as to provide a smooth transition from rotational motions of the main shaft 6 and rotor hub 5 to standstill without the occurrence of respective vibrations and/or oscillations (cf. step S8). Hence, the reversely operated generator 4 is used to "park" the rotor hub 5 of the wind turbine 1 in a "parking mode". In this situation, the reversely operated generator 4 consumes electric power which is denoted as -ΔE.

The inventive principle allows controlled start-up and shut-down of a wind turbine 1 without or at least reduced structural vibrations and/or oscillations particularly during start-up and shut-down situations with comparatively low wind speeds. In such a manner, tear and wear of respective sliding bearings 7 is reduced, particularly during slow rotational speeds of the respective sliding bearings 7. This is based on the fact that hydrodynamic lubrication state is obtained by concertedly supporting the rotation of the respective sliding bearings 7 by means of the generator 4 being reversely operated in terms of an electric motor. All in all, the operation and life time of the wind turbine 1 may be improved with the inventive principle.

Although the present invention has been described in detail with reference to the preferred embodiment, the present invention is not limited by the disclosed examples from which the skilled person is able to derive other variations without departing from the scope of the invention.

## Claims

1. Method for operating a wind turbine (1), comprising at least one generator (4)and at least two components being rotatably supported relative to each other by means of at least one sliding bearing (7), whereby at least one operational state information (I) of the wind turbine (1) indicating the operational state of the wind turbine (1) is determined, **characterised in that** the generator (4) is operated as an electric motor for driving the wind turbine (1) to overcome the static friction of the sliding bearing if the at least one operational state information (I) indicates start-up or shut-down of the wind turbine (1).

2. Method according to claim 1, wherein the operational state information (I) is determined by considering at least one operational parameter of the wind turbine (1).

3. Method according to claim 2, wherein the used operational parameter of the wind turbine (1) is or indicates the torque on the or further rotatable components of the wind turbine (1) and/or the rotational speed of the or further rotatable components of the wind turbine (1) and/or the state of lubrication of the at least one sliding bearing (7), particularly the film thickness of the lubricant, and/or wind speed.

4. Method according to claim 2 or 3, wherein the operational state information (I) indicates start-up of the wind turbine (1) by considering the rotational speed of at least one rotatable component of the wind turbine (1), particularly the central shaft (6) of the wind turbine (1), whereby start-up is indicated when the rotational speed of the component lies in a given interval ranging from 0 rpm to a given threshold rpm (n_{crit}).

5. Method according to claim 4, wherein a rotor blade pitch angle control means (14) adjusts a pitch angle of rotor blades of the wind turbine (1) during start-up of the wind turbine (1) when the rotational speed of the rotatable component is above the given threshold rpm (n_{crit}) so as to increase the angle of attack of wind on the rotor blades.

6. Method according to one of the preceding claims, wherein the operational state information (I) indicates shut-down of the wind turbine (1) by considering the rotational speed of at least one rotatable component of the wind turbine (1), particularly the central shaft (6) of the wind turbine (1), whereby shut-down is indicated when the rotational speed of the component lies in a given interval ranging from a given threshold rpm (n_{crit}) to 0 rpm.

7. Method according to claim 6, wherein a rotor blade pitch angle control means (14) adjusts a pitch angle of rotor blades of the wind turbine during shut-down of the wind turbine (1) when the rotational speed of the rotatable component is below the given threshold rpm (n_{crit}) so as to decrease the angle of attack of wind on the rotor blades.

8. Method according to one of the preceding claims, wherein wind speed is determined, whereby, when the wind turbine (1) is intended to start its operation and wind speed is below a given wind speed threshold value, the start-up of the wind turbine (1) is delayed until wind speed is above the threshold wind speed.

9. Wind turbine (1), particularly direct drive wind turbine, comprising at least one generator (4), at least two components being rotatably supported relative to each other by means of at least one sliding bearing (7), **characterised by** a control unit (13) adapted to execute the method according to one of the preceding claims.

## Patentansprüche

1. Verfahren zum Betreiben einer Windenergieanlage (1), die mindestens einen Generator (4) und mindestens zwei Komponenten umfasst, die mit Hilfe mindestens eines Gleitlagers (7) in Bezug zueinander drehbar gelagert sind, wobei mindestens eine Betriebszustandsinformation (I) der Windenergieanlage (1) ermittelt wird, welche den Betriebszustand der Windenergieanlage (1) anzeigt, **dadurch gekennzeichnet, dass** der Generator (4) als Elektromotor zum Antreiben der Windenergieanlage (1) zwecks Überwinden der Haftreibung des Gleitlagers betrieben wird, wenn die mindestens eine Betriebszustandsinformation (I) ein Anlaufen oder Abschalten der Windenergieanlage (1) anzeigt.

2. Verfahren nach Anspruch 1, bei dem die Betriebszustandsinformation (I) durch Berücksichtigen mindestens eines Betriebsparameters der Windenergieanlage (1) ermittelt wird.

3. Verfahren nach Anspruch 2, bei dem der benutzte Betriebsparameter der Windenergieanlage (1) das Drehmoment und/ oder die Drehzahl der drehbaren Komponenten oder weiterer drehbarer Komponenten der Windenergieanlage (1) und/ oder der beziehungsweise den Schmierzustand des mindestens einen Gleitlagers (7), insbesondere die Schichtdicke des Schmiermittels, und/ oder die Windgeschwindigkeit ist oder anzeigt.

4. Verfahren nach Anspruch 2 oder 3, bei dem die Betriebszustandsinformation (I) ein Anlaufen der Windenergieanlage (1) anzeigt, indem die Drehzahl von mindestens einer drehbaren Komponente der Windenergieanlage (1), insbesondere der Hauptwelle (6) der Windenergieanlage (1), berücksichtigt wird, wobei ein Anlaufen angezeigt wird, wenn die Drehzahl der Komponente in einem gegebenen Intervall liegt, das von 0 U/min bis zu einem gegebenen Schwellwert der U/min (nₖᵣᵢₜ) reicht.

5. Verfahren nach Anspruch 4, bei dem ein Rotorblattanstellwinkelsteuermittel (14) einen Anstellwinkel von Rotorblättern der Windenergieanlage (1) beim Anlaufen der Windenergieanlage (1) justiert, wenn die Drehzahl der drehbaren Komponente über dem gegebenen Schwellwert der U/min (nₖᵣᵢₜ) liegt, um den Anströmwinkel von Wind an den Rotorblättern zu vergrößern.

6. Verfahren nach einem der vorhergehenden Ansprüche, bei dem die Betriebszustandsinformation (I) ein Abschalten der Windenergieanlage (1) anzeigt, indem die Drehzahl von mindestens einer drehbaren Komponente der Windenergieanlage (1), insbesondere der Hauptwelle (6) der Windenergieanlage (1), berücksichtigt wird, wobei ein Abschalten angezeigt wird, wenn die Drehzahl der Komponente in einem gegebenen Intervall liegt, das von einem gegebenen Schwellwert der U/min (nₖᵣᵢₜ) bis zu 0 U/min reicht.

7. Verfahren nach Anspruch 6, bei dem ein Rotorblattanstellwinkelsteuermittel (14) einen Anstellwinkel von Rotorblättern der Windenergieanlage (1) beim Abschalten der Windenergieanlage (1) justiert, wenn die Drehzahl der drehbaren Komponente unter dem gegebenen Schwellwert der U/min (nₖᵣᵢₜ) liegt, um den Anströmwinkel von Wind an den Rotorblättern zu verkleinern.

8. Verfahren nach einem der vorhergehenden Ansprüche, bei dem die Windgeschwindigkeit ermittelt wird, wobei, wenn die Windenergieanlage (1) ihren Betrieb aufnehmen soll und die Windgeschwindigkeit unter einem gegebenen Windgeschwindigkeitsschwellwert liegt, das Anlaufen der Windenergieanlage (1) verzögert wird, bis die Windgeschwindigkeit über der Schwellwertwindgeschwindigkeit liegt.

9. Windenergieanlage (1), insbesondere getriebelose Windenergieanlage, mit mindestens einem Generator (4), wobei mindestens zwei Komponenten mit Hilfe mindestens eines Gleitlagers (7) in Bezug zueinander drehbar gelagert sind, **gekennzeichnet durch** eine Steuereinheit (13), die so ausgelegt ist, dass sie das Verfahren nach einem der vorhergehenden Ansprüche ausführt.

## Revendications

1. Procédé de fonctionnement d'une éolienne (1) comprenant au moins une génératrice (4) et au moins deux composants supportés en rotation l'un par rapport à l'autre au moyen d'au moins un palier à glissement (7), où est déterminée au moins une information d'état de fonctionnement (I) de l'éolienne (1) indiquant l'état de fonctionnement de l'éolienne (1), **caractérisé en ce que** l'on fait fonctionner la génératrice (4) comme un moteur électrique pour entraîner l'éolienne (1), afin de surmonter le frottement statique du palier à glissement, si l'au moins une information d'état de fonctionnement (I) indique le démarrage ou l'arrêt de l'éolienne (1).

2. Procédé selon la revendication 1, dans lequel l'information d'état de fonctionnement (I) est déterminée en considérant au moins un paramètre de fonctionnement de l'éolienne (1).

3. Procédé selon la revendication 2, dans lequel le paramètre de fonctionnement utilisé de l'éolienne (1) est ou indique le couple appliqué au ou à d'autres composants rotatifs de l'éolienne (1) et/ou la vitesse de rotation du ou d'autres composants rotatifs de l'éolienne (1) et/ou l'état de lubrification de l'au moins un palier à glissement (7), particulièrement l'épaisseur de film du lubrifiant, et/ou la vitesse du vent.

4. Procédé selon la revendication 2 ou 3, dans lequel l'information d'état de fonctionnement (I) indique le démarrage de l'éolienne (1), en considérant la vitesse de rotation de l'au moins un composant rotatif de l'éolienne (1), particulièrement l'arbre central (6) de l'éolienne (1), où le démarrage est indiqué quand la vitesse de rotation du composant se situe dans un intervalle donné, passant de 0 tr/min à un seuil donné tr/min (n_{crit}).

5. Procédé selon la revendication 4, dans lequel un moyen de commande d'angle de calage des pales de rotor (14) règle un angle de calage des pales du rotor de l'éolienne (1) au cours du démarrage de l'éolienne (1), quand la vitesse de rotation du composant rotatif est au-dessus du seuil donné tr/min (n_{crit}), de façon à augmenter l'angle d'attaque du vent sur les pales du rotor.

6. Procédé selon l'une quelconque des revendications précédentes, dans lequel l'information d'état de fonctionnement (I) indique un arrêt de l'éolienne (1), en considérant la vitesse de rotation de l'au moins un composant rotatif de l'éolienne (1), particulièrement l'arbre central (6) de l'éolienne (1), où un arrêt est indiqué quand la vitesse de rotation du composant se situe dans un intervalle donné, passant d'un seuil donné tr/min (n_{crit}), à 0 tr/min.

7. Procédé selon la revendication 6, dans lequel un moyen de commande d'angle de calage des pales de rotor (14) règle un angle de calage des pales du rotor de l'éolienne au cours de l'arrêt de l'éolienne (1), quand la vitesse de rotation du composant rotatif est au-dessous du seuil donné tr/min (n_{crit}), de façon à diminuer l'angle d'attaque du vent sur les pales du rotor.

8. Procédé selon l'une quelconque des revendications précédentes, dans lequel est déterminée la vitesse du vent, où, quand il est prévu que l'éolienne (1) commence à fonctionner et que la vitesse du vent est inférieure à une valeur seuil donnée de la vitesse du vent, le démarrage de l'éolienne (1) est retardé jusqu'à ce que la vitesse du vent soit supérieure à la vitesse de vent de seuil.

9. Eolienne (1), particulièrement éolienne à entraînement direct, comprenant au moins une génératrice (4), au moins deux composants supportés en rotation l'un par rapport au l'autre au moyen d'au moins un palier à glissement (7), **caractérisée par** une unité de commande (13) adaptée pour exécuter le procédé selon l'une quelconque des revendications précédentes.
